# EUROPEAN PATENT APPLICATION

(11) **EP 4 837 994 A1**
(43) Date of publication of application: **11.11.2026**
(21) Application number: 25174236.7
(22) Date of filing: 05.05.2025
(51) Int. Cl.: C25B 1/04, C25B 1/50, C25B 9/70, C25B 11/051, C25B 11/075, C25B 11/091, C25B 15/02, C25B 15/023, C25B 15/08

(54) **METHOD AND DEVICE FOR TWO-CELL DECOUPLED ACID WATER ELECTROLYSIS**

(71) Applicant: SIA "ProtiumTech", Ogres nov., LV-5060 (LV)
(72) Inventor: Vanags, Martins, 2125 Baldone (LV); Sutka, Andris, 1010 Riga (LV)
(74) Representative: Moosedog Oy

(57) **Abstract**

A method for producing hydrogen and oxygen using a two-cell decoupled water electrolysis device (100) comprising a first gas electrode (114a) and a first redox electrode (116a) in a first electrolysis cell (110), a second gas electrode (114b) and a second redox electrode (116b) in a second electrolysis cell (120), the first electrolysis cell and the second electrolysis cell further comprising an acid electrolyte (112), the method comprising generating hydrogen gas at the first gas electrode (114a) and oxygen gas at the second gas electrode during a first period of time by applying a first external voltage between the first gas electrode and the second gas electrode to generate hydrogen gas at the first gas electrode and to generate oxygen gas at the second gas electrode; collecting hydrogen gas from the first electrolyte cell and oxygen gas from the second electrolyte cell using a gas management system.

## Description

### TECHNICAL FIELD

The present disclosure relates to the field of electrochemical hydrogen and oxygen production technologies. More particularly, the disclosure concerns a method and a device for decoupled water electrolysis using acid-based two-cell electrolysis systems.

### BACKGROUND

Hydrogen is increasingly viewed as a key energy carrier in the transition toward more sustainable energy systems. Water electrolysis represents a fundamental method for producing hydrogen using electricity from renewable sources such as wind and solar. In this context, the use of acid-based electrochemical systems is recognized for their high proton conductivity and reaction efficiency.

Typically, conventional electrolysis devices rely on proton exchange membranes (PEMs) to separate the cathode and anode compartments. These membranes maintain the separation of hydrogen and oxygen gases, but they also introduce several critical drawbacks. Among these are elevated production and operational costs, limited material stability in acidic environments, and safety concerns related to membrane degradation. Furthermore, PEM-based systems are often reliant on fluoropolymer materials, which are under increasing regulatory scrutiny due to environmental and health concerns.

Another major limitation in traditional systems is the dependency on steady and continuous electrical energy input. Since many renewable energy sources exhibit fluctuating output due to changing environmental conditions, managing and storing intermittent energy becomes a substantial engineering challenge. In addition, the simultaneous production of hydrogen and oxygen in a single electrochemical cell poses complexity in gas collection, separation, and purity assurance.

To address these issues, prior work has investigated alkaline-based decoupled electrolysis systems using solid-state redox mediators. These systems aim to spatially or temporally separate gas generation reactions, but they often suffer from reduced ionic conductivity in alkaline media, limited efficiency, and lower long-term stability.

Therefore, in light of the foregoing discussion, there is a need to overcome the aforementioned limitations to enhance safety, efficiency, and adaptability of water electrolysis systems under variable energy inputs. There is a comprehensive need for a solution that allows for temporally or spatially decoupled gas production without relying on environmentally problematic materials.

### SUMMARY

The aim of the present disclosure is to provide a method and a device to enable efficient and safe decoupled hydrogen and oxygen gas production in acidic environments without reliance on membranes.

The aim of the disclosure is achieved by a method for producing hydrogen and oxygen using a two-cell decoupled water electrolysis device as defined in the appended independent claims to which reference is made. The aim is further achieved by a two-cell acid water electrolysis device for producing hydrogen and oxygen as defined in the appended independent claims to which reference is also made. Advantageous features are set out in the appended dependent claims.

The embodiments of the present disclosure substantially enable to improve safety, efficiency, and operational flexibility of electrochemical hydrogen production. The decoupling of hydrogen and oxygen production into separate cells enables alternating operation cycles, minimizes cross-contamination risks, and avoids the need for membrane materials. The ability to reverse the voltage polarity for alternating gas generation supports energy management strategies aligned with fluctuating renewable energy sources.

Additional aspects, advantages, features and objects of the present disclosure would be made apparent from the drawings and the detailed description of the illustrative embodiments constructed in conjunction with the appended claims that follow.

### BRIEF DESCRIPTION OF THE DRAWINGS

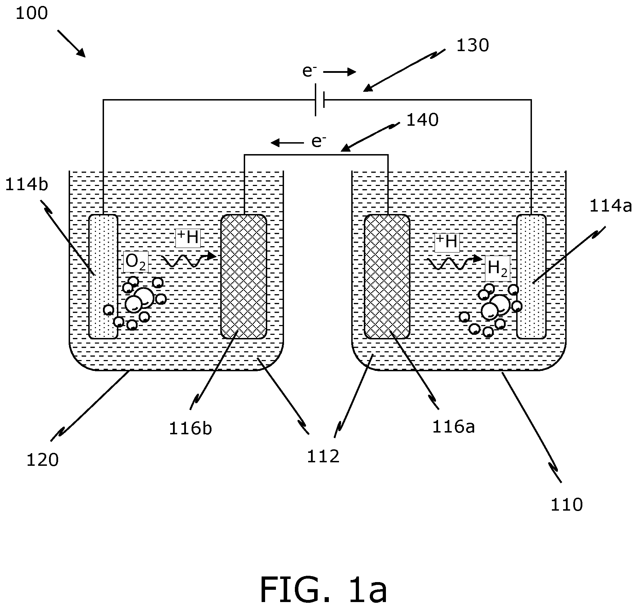

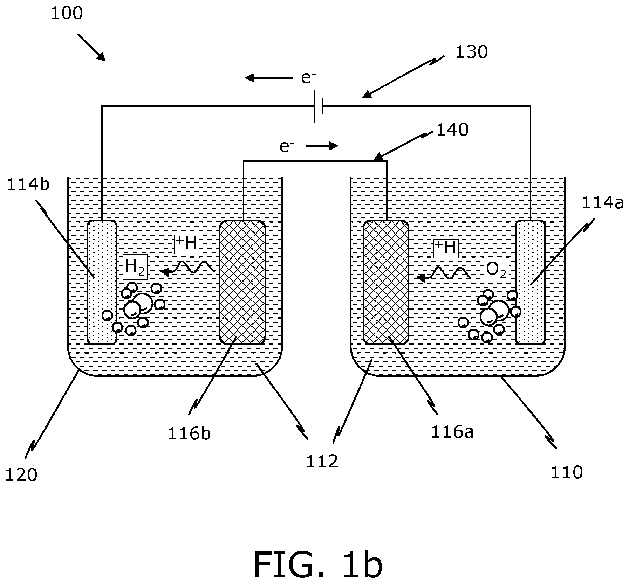

FIG. 1a and FIG. 1b are schematic illustrations of a two-cell decoupled acid water electrolysis device according to an embodiment.

### DETAILED DESCRIPTION OF EMBODIMENTS

The following detailed description illustrates embodiments of the present disclosure and ways in which they can be implemented.

In a first aspect, an embodiment of the present disclosure provides a method for producing hydrogen and oxygen using a two-cell decoupled water electrolysis device comprising a first gas electrode and a first redox electrode in a first electrolysis cell, a second gas electrode and a second redox electrode in a second electrolysis cell, the first electrolysis cell and the second electrolysis cell further comprising an acid electrolyte, the method comprising following steps:
a) generating hydrogen gas at the first gas electrode and oxygen gas at the second gas electrode during a first period of time by
   - applying a first external voltage between the first gas electrode and the second gas electrode to
      ∘ generate hydrogen gas at the first gas electrode;
      ∘ generate oxygen gas at the second gas electrode;
   - collecting hydrogen gas from the first electrolyte cell and oxygen gas from the second electrolyte cell using a gas management system;
b) generating hydrogen gas at the second gas electrode and oxygen gas at the first redox electrode during a second period of time by
   - applying a second external voltage between the first gas electrode and the second gas electrode, wherein the second external voltage is applied with a polarity opposite to that of the first external voltage, to
      ∘ generate hydrogen gas at the second gas electrode;
      ∘ generate oxygen gas at the first gas electrode;
   - collecting hydrogen gas from the second electrolyte cell and oxygen gas from the first electrolyte cell during the first period of time using the gas management system.

In a second aspect, an embodiment of the present disclosure provides a two-cell acid water electrolysis device for producing hydrogen and oxygen comprising, the two-cell acid water electrolysis device comprising:
- a first electrolysis cell comprising:
   ∘ a first gas electrode;
   ∘ a first redox electrode; and
   ∘ an acid electrolyte.
- a second electrolysis cell comprising;
   ∘ a second gas electrode;
   ∘ a second redox electrode; and
   ∘ the acid electrolyte;
- a first electrical connection between the first redox electrode and the second redox electrode;
- a second electrical connection between the first gas electrode and the second gas electrode;
- an external power supply electrically connected to the first gas electrode and the second gas electrode, the external power supply configured to apply an external voltage between the first gas electrode and the second gas electrode;
- a gas management system configured to separately collect hydrogen gas from the first electrolysis cell and oxygen gas from the second electrolysis cell;
- a controller configured to control:
   ∘ the external power supply to
      ▪ apply a first external voltage between the first gas electrode and the second gas electrode during a first period of time to
         - generate hydrogen gas at the first gas electrode;
         - generate oxygen gas at the second gas electrode;
      ▪ apply a second external voltage between the first gas electrode and the second gas electrode during a second period of time, wherein the second external voltage is applied with a polarity opposite to that of the first external voltage, to
         - generate hydrogen gas at the second gas electrode;
         - generate oxygen gas at the first gas electrode;
      ∘ gas management system to collect
         ▪ hydrogen gas from the first electrolyte cell and oxygen gas from the second electrolyte cell during the first period of time;
         ▪ hydrogen gas from the second electrolyte cell and oxygen gas from the first electrolyte cell during the second period of time.

In this method, a first electrolysis cell comprises a first gas electrode and a first redox electrode, both in contact with an acid electrolyte. A second electrolysis cell comprises a second gas electrode and a second redox electrode, also in contact with an acid electrolyte. During a first period of time, the applied first external voltage causes water molecules in the electrolyte to undergo electrochemical splitting, producing hydrogen gas at the first gas electrode in the first electrolysis cell and oxygen gas at the second gas electrode in the second electrolysis cell. A gas management system collects the hydrogen gas from the first electrolysis cell and oxygen gas from the second electrolysis cell.

Then the external voltage is reversed in polarity and during the second period of time, the second external voltage drives hydrogen generation at the second gas electrode in the second electrolysis cell, and oxygen generation at the first gas electrode in the first electrolysis cell. The gas management system now collects hydrogen gas from the second electrolysis cell and oxygen gas from the first electrolysis cell, with reversed spatial separation of the gas production sites.

The technical benefit of this method is that it enables alternating and spatially-separated production of hydrogen and oxygen gas between two acid electrolyte cells without the use of a membrane. By applying the first external voltage and later reversing it into the second external voltage, each gas electrode alternately serves as an anode and a cathode. This design removes the need for gas separation membranes while maintaining full functionality and safety in acid media. The gas collection from individual cells with the gas management system allows for high-purity hydrogen and oxygen, and the cycling polarity operation enables integration with fluctuating DC power sources such as photovoltaic panels. The method is particularly advantageous in minimizing cross-contamination, reducing costs, and increasing material durability in acidic electrolysis environments.

Optionally, the present disclosure provides the two-cell decoupled water electrolysis device that further comprises a first redox mediator in the first electrolysis cell and a second redox mediator in the second electrolysis cell, wherein during the first period of time the first redox mediator is in a charged state the second mediator is in a discharged state and the first period of time lasts until the first redox mediator is in the discharged state and the second mediator is in the charged state. During the first period of time-when hydrogen is produced at the first gas electrode and oxygen at the second gas electrode-the first redox mediator is initially in a charged state, for instance in a lower oxidation state. It participates in the hydrogen generation at the first gas electrode in the first electrolysis cell and is gradually discharged. Simultaneously, the second redox mediator in the second electrolysis cell is in a discharged state and becomes charged through the transfer of electrons as it supports oxygen generation at the second gas electrode. The process continues until the redox states are effectively swapped: the first redox mediator becomes discharged, and the second redox mediator becomes charged. At that point, the voltage polarity is reversed, initiating the second period of time as defined above.

The technical effect of incorporating the first and the second redox mediator in this configuration is that they allow temporal energy storage within the redox couples themselves, facilitating the decoupling of hydrogen and oxygen generation reactions in time and space. This enables smoother system operation, even with intermittent power inputs. Moreover, redox mediators stabilize the electrode processes and buffer voltage fluctuations by temporarily holding charge. This feature increases system flexibility and improves the overall control of the reaction kinetics during alternating operation cycles. The cyclic charge-discharge mechanism between the redox mediators enhances energy efficiency and enables reliable switching between gas generation phases.

Optionally, the first redox mediator and the second redox mediator comprises at least one of: tungsten trioxide (WO₃), manganese dioxide (MnO₂), vanadium(IV) oxide (VO₂), carbon, titanium dioxide (TiO₂), molybdenum trioxide (MoO₃). Each of these materials possesses properties that enable them to participate in reversible proton-coupled electron transfer reactions, making them suitable for use as pseudocapacitive redox mediators in acidic aqueous systems. For example, WO₃ and MoO₃ are transition metal oxides known for their ability to intercalate protons and switch between oxidized and reduced states without significant structural degradation. MnO₃ and VO₂ also exhibit redox activity under acidic conditions and can function as charge storage materials in the redox cycling process. Carbon-based materials serve as conductive scaffolds, improving electron transport within the electrode structure and facilitating uniform dispersion of active components. TiO₂, though less active in acidic conditions on its own, may serve as a supporting oxide, contributing to the structural integrity and enhancing long-term chemical stability of the mediator composite.

The technical advantage of this material selection is that it offers flexibility in tailoring the redox mediators to meet specific operational requirements such as charge capacity, redox potential, structural robustness, and compatibility with the acid electrolyte. By incorporating one or more of these materials, the mediators can be engineered to exhibit optimized kinetics for proton intercalation/de-intercalation, increased surface area for Faradaic reactions, and improved tolerance to repetitive cycling. This contributes to higher energy efficiency, extended electrode life, and stable long-term performance of the electrolysis system, particularly under fluctuating voltage and temperature conditions. Moreover, using composite mediators formed from combinations of these materials enables the balancing of electronic conductivity, chemical reactivity, and mechanical strength within a single redox electrode design.

Optionally, during the first period of time the second redox mediator comprises tungsten trioxide (WO₃) and the first redox mediator comprises hydrogen-intercalated tungsten trioxide (H-WO₃). Tungsten trioxide (WO₃) is a material capable of undergoing reversible proton intercalation and de-intercalation. Hydrogen-intercalated tungsten trioxide (H-WO₃) represents the reduced (charged) form of WO₃. During the first period of time, H⁺ ions are released from the H-WO₃ mediator at the first redox electrode in the first electrolysis cell, causing the first redox mediator to revert back to WO₃. At the same time, the WO₃ in the second electrolysis cell intercalates H⁺ ions at the second redox electrode, forming H-WO₃. These redox transformations are coupled with hydrogen gas and oxygen gas generation reactions at the gas electrodes, enabling synchronized hydrogen and oxygen production. The redox transition is driven electrochemically under applied external voltage, allowing the redox mediators to swap roles between the first period of time and the second period of time.

The technical benefit of using WO₃ and H-WO₃ as redox mediator pairs lies in their excellent pseudocapacitive behavior, proton conductivity, and stability in acidic media. WO₃ offers a well-defined redox couple that can reversibly store and release protons with minimal degradation over time. This improves the durability and efficiency of the electrolysis process. Furthermore, tungsten trioxide materials are known for their wide electrochemical stability window and their compatibility with acidic environments. Their incorporation supports reversible charge transfer reactions and contributes to smooth, cyclic switching between gas production phases. This enables continuous operation without requiring complex external energy storage systems.

Optionally, the second external voltage is applied when at least one of the following is detected: the first redox mediator in a charged state, the second redox mediator in a charged state, the first redox mediator in a discharged state, the second redox mediator in a discharged state. For instance, during the first period of electrolysis, when the first redox mediator (e.g. H-WO₃) is being discharged and the second redox mediator (e.g. WO₃) is being charged, the system monitors their states. Detection may be achieved through electrochemical potential measurements, spectroscopic sensors, or embedded diagnostic algorithms. When a threshold condition is met-such as the first redox mediator reaching a fully discharged state or the second redox mediator reaching a fully charged state-the control system triggers the applying the change in the external voltage. The second external voltage with the opposite polarity is applied, thus beginning the hydrogen gas generation at the second gas electrode and oxygen gas generation at the first gas electrode. The detection logic can be based on reaching set potential windows or impedance signatures associated with charge saturation.

The technical effect of this feature is enhanced process automation and system responsiveness. By actively monitoring the redox states of the redox mediators, the system can switch gas generation phases at the optimal point in each cycle. This avoids underutilization or overcharging of the redox materials, prolongs their life, and stabilizes the electrochemical performance over time. Additionally, such logic allows adaptation to varying operational conditions, such as ambient temperature or input power fluctuations. This improves system efficiency, maintains high gas purity, and supports integration with smart energy management systems.

Optionally, the first external voltage and the second external voltage is in a range from 1.6 V up to 2.2 V. This range ensures efficient electrochemical operation of the water splitting reactions while avoiding parasitic side reactions. For example, the process typically initiates when the external voltage reaches at least 1.5 V, although this threshold may vary slightly depending on the specific cell architecture and electrolyte concentration. Below this value, the driving force may be insufficient to initiate significant gas generation. As the voltage is increased beyond 1.6 V, the hydrogen generation and oxygen generation proceed efficiently at the gas electrodes. However, if the applied voltage exceeds 2.2 V, parasitic reactions may begin to occur, particularly at the redox electrodes, such as unintended oxygen and hydrogen generation reactions directly on the redox mediator surfaces. This undesired behavior compromises the stability and selectivity of the system.

Further, optionally, during operation, the range from 1.6 V up to 2.2 V can be monitored and verified through electrochemical methods. A common practical indicator is the observation of a plateau or a distinct change in slope on the potential-versus-time or potential-versus-current curve, signifying the optimal operating voltage for redox mediator cycling. For instance, when plotting voltage against time during a charging phase, a stable voltage plateau typically appears between 1.7 V and 2.0 V, indicating controlled redox activity and gas generation. If the slope steepens beyond this window, it may indicate the onset of parasitic reactions and overpotential effects, at which point the voltage can be regulated or the polarity reversed.

The technical benefit of constraining the applied voltage within the defined range is to ensure electrochemical stability and energy efficiency. Staying within 1.6-2.2 V avoids degradation of redox mediators and minimizes side reactions, preserving the integrity of both the redox and gas electrodes. Additionally, controlled operation within this window enables longer system lifetimes, consistent gas purity, and reproducible switching behavior under alternating current regimes.

Optionally, the hydrogen gas is generated via a hydrogen evolution reaction (HER) and oxygen is generated via an oxygen evolution reaction (OER). In the context of the present disclosure, the generation of hydrogen and oxygen gases is exclusively based on the hydrogen evolution reaction (HER) and the oxygen evolution reaction (OER), which are the primary electrochemical pathways for water splitting in acid electrolyte systems. Other gas-forming reactions are not intended in the operation of the disclosed system.

The technical benefit of explicitly implementing HER and OER reactions is that these are the standard and efficient electrochemical routes for water splitting, minimizing unwanted side reactions and ensuring high gas purity. Additionally, these reactions are compatible with the acidic environment of the electrolyte and the materials selected for electrodes, enabling long-term operation and high reaction kinetics.

Optionally, method further comprises measuring a voltage between the first gas electrode and the second gas electrode and wherein the second external voltage is applied when the voltage below a voltage threshold value is detected. Further, optionally, a voltage sensor or monitoring circuit is integrated into the system to detect the potential difference applied across the first gas electrode and the second gas electrode during the first period of operation. As the electrochemical reactions proceed, the redox mediators in the first and the second electrolysis cell undergo charge transfer. Over time, this leads to a change in cell potential, typically characterized by a gradual voltage drop as the redox mediators approach their fully charged or discharged states.

Once the measured voltage falls below a pre-determined threshold value-indicating that the redox reaction has completed or reached a critical point-the control system initiates a polarity switch. The second external voltage, with opposite polarity to the first, is then applied to reverse the roles of the gas electrodes, thereby beginning the second period of operation. For instance, if the voltage drops below 1.6 V, which may be associated with a drop in driving force or the depletion of one redox mediator's charge state, the switching process is triggered. The pre-determined threshold value may be experimentally determined based on system configuration and could be, for example, 1.55 V or 1.60 V depending on the specific electrode kinetics and redox mediator concentration.

The technical benefit of this feature lies in its ability to automate polarity reversal based on real-time electrochemical conditions, enhancing system autonomy and energy management. Voltage-based switching avoids relying solely on time-based intervals, which may not reflect the actual electrochemical state of the system. This ensures that switching occurs precisely when energy transfer from one redox mediator to another is no longer efficient. It also prevents overcharging or over-discharging of redox mediators, which could lead to parasitic reactions or irreversible degradation. As a result, the system achieves higher stability, operational efficiency, and better integration with variable power sources.

The present disclosure also relates to the method for manufacturing the composite material as described above. Various embodiments and variants disclosed above, with respect to the aforementioned method manufacturing the composite material, apply *mutatis mutandis* to the composite material.

In a second aspect, the present disclosure provides a two-cell acid water electrolysis device for producing hydrogen and oxygen comprising, the two-cell acid water electrolysis device comprising:
- a first electrolysis cell comprising:
   ∘ a first gas electrode;
   ∘ a first redox electrode; and
   ∘ an acid electrolyte.
- a second electrolysis cell comprising;
   ∘ a second gas electrode;
   ∘ a second redox electrode; and
   ∘ the acid electrolyte;
- a first electrical connection between the first redox electrode and the second redox electrode;
- a second electrical connection between the first gas electrode and the second gas electrode;
- an external power supply electrically connected to the first gas electrode and the second gas electrode, the external power supply configured to apply an external voltage between the first gas electrode and the second gas electrode;
- a gas management system configured to separately collect hydrogen gas from the first electrolysis cell and oxygen gas from the second electrolysis cell;
- a controller configured to control:
   ∘ the external power supply to
      ▪ apply a first external voltage between the first gas electrode and the second gas electrode during a first period of time to
         - generate hydrogen gas at the first gas electrode;
         - generate oxygen gas at the second gas electrode;
      ▪ apply a second external voltage between the first gas electrode and the second gas electrode during a second period of time, wherein the second external voltage is applied with a polarity opposite to that of the first external voltage, to
         - generate hydrogen gas at the second gas electrode;
         - generate oxygen gas at the first gas electrode;

∘ gas management system to collect
   ▪ hydrogen gas from the first electrolyte cell and oxygen gas from the second electrolyte cell during the first period of time;
   ▪ hydrogen gas from the second electrolyte cell and oxygen gas from the first electrolyte cell during the second period of time.

The technical advantage of this device lies in its structural decoupling of electrochemical reactions, allowing for safe, membrane-free separation of hydrogen and oxygen generation. By employing reversible polarity on the gas electrodes, the first and the second electrolysis cell can participate in both reactions over time, enabling a cyclic and balanced load on all electrodes. The use of a controller and a coordinated gas management system enhances process automation and ensures high-purity gas collection. The term "*gas management system"* as used herein refers to system that is configured to handle hydrogen and oxygen gases in a variety of ways, depending on operational requirements and safety considerations. The gas management system may include separate storage tanks dedicated to hydrogen and oxygen to ensure gas purity and avoid cross-contamination. Overpressure protection mechanisms, such as pressure sensors and relief valves, can be utilised to prevent excessive pressure build-up within the storage vessels or pipelines. Further, the gas management system may comprise flow controllers and directional valves to manage gas collection during different operational periods, enabling dynamic redirection of hydrogen and oxygen outputs as the polarity of the external voltage is switched. Additionally, nitrogen gas bubbling can be used then the polarity of the external voltage is switched. Hydrogen gas, in particular, can be stored in any desired storage device, such as pressurised tanks, flexible balloons capable of withstanding internal pressure, or metal hydride storage systems that allow for solid-state hydrogen absorption. In addition, the gas management system may integrate gas compression or liquefaction units to reduce storage volume, as well as purging lines and safety venting systems to remove residual gases during maintenance or phase transitions, thereby enhancing operational safety. Gas purity sensors can also be incorporated to continuously monitor the quality of the collected gases, ensuring suitability for downstream applications and allowing automatic venting or recirculation of contaminated gas streams. These features collectively enable the system to maintain high operational flexibility, safety, and efficiency during continuous or intermittent operation cycles.

This design of the two-cell acid water electrolysis device is particularly beneficial for coupling with intermittent power sources like solar or wind, as the device allows on-demand reversal and continues to function within a well-controlled electrochemical environment. The separation of gas streams at the structural level increases safety, reduces the need for membranes, and enhances long-term durability of the electrolysis stack.

Optionally, the two-cell decoupled water electrolysis device, wherein the redox electrode is a pseudocapacitive redox electrode. The pseudocapacitive redox electrode is one that stores and releases electrical energy through fast, reversible Faradaic reactions at or near the surface of the electrode material. In this system, materials such as tungsten trioxide (WO₃) or hydrogen-intercalated tungsten trioxide (H-WO₃) are used due to their well-known pseudocapacitive behavior in acidic environments. These electrodes are capable of intercalating protons (H⁺) from the electrolyte and releasing them again upon reversal of current, facilitating a controlled, cyclic redox process.

The technical benefit of using pseudocapacitive redox electrodes is higher cycle life, and more stable electrochemical performance. Their ability to reversibly store and release protons at the electrode-electrolyte interface makes them highly suited for the alternating operation mode required by the present disclosure. The Faradaic reactions occur with minimal structural degradation, supporting long-term durability. Additionally, the pseudocapacitive electrodes offer greater tolerance to high current densities and fast switching, making them ideal for integration with fluctuating renewable energy sources such as solar panels. Their high surface-area-to-volume ratio also enhances overall reaction kinetics, contributing to higher system efficiency.

Optionally, in the two-cell decoupled water electrolysis device, the first electrolysis cell and the second electrolysis cell are acid-resistant. This includes all internal surfaces and housing materials that are in contact with the acid electrolyte. The acid resistance may be optionally achieved by using binders such as polyvinylidene fluoride (PVDF), polytetrafluoroethylene (PTFE), or perfluoroalkoxy alkane (PFA) which enhance the mechanical durability of the electrodes or by using acid-stable ceramics, corrosion-resistant metals such as titanium or carbon.

The technical benefit of acid-resistant construction is long-term durability and performance stability under repeated and continuous electrolysis cycles. Acid electrolytes offer high ionic conductivity and support efficient gas generation reactions, but they also pose a risk of degrading conventional materials through chemical attack. By using acid-resistant materials, the device minimizes the risk of leakage, component failure, or contamination of the gas products. This enables safer operation over thousands of cycles and reduces maintenance requirements. It also supports stable electrochemical conditions that are necessary for high Faradaic efficiency and repeatable performance in both hydrogen gas and oxygen gas generation phases.

Optionally, the two-cell decoupled water electrolysis device further comprises a first redox mediator in the first electrolysis cell and a second redox mediator in the second electrolysis cell, wherein during the first period of time the first redox mediator is in a charged state the second redox mediator is in a discharged state and the first period of time lasts until the first redox mediator is in the discharged state and the second redox mediator is in the charged state. As described above, the technical benefits of integrating redox mediators into the two-cell decoupled water electrolysis device are: redox cycling enables energy buffering, spatial decoupling of gas generation reactions, compatibility with intermittent power sources, improving safety and efficiency and continuous and simultaneous generation of hydrogen gas and oxygen gas.

Optionally, in the two-cell decoupled water electrolysis device the first redox mediator and the second redox mediator comprise at least one of: tungsten trioxide, manganese dioxide, vanadium(IV) oxide, carbon, titanium dioxide, molybdenum trioxide. Each of these materials possesses properties that enable them to participate in reversible proton-coupled electron transfer reactions, making them suitable for use as pseudocapacitive redox mediators in acidic aqueous systems. The technical advantage of this material selection is that it offers flexibility in tailoring the redox mediators to meet specific operational requirements such as charge capacity, redox potential, structural robustness, and compatibility with the acid electrolyte.

Optionally, in the two-cell decoupled water electrolysis device, the first gas electrode and the second gas electrode each independently comprise one or more catalysts selected from platinum (Pt), iridium dioxide (IrO₂), and ruthenium dioxide (RuO₂). These materials are known for their excellent catalytic performance in acid media. A catalyst layer may be deposited by sputtering, chemical vapor deposition, electrodeposition, or thermal decomposition techniques, depending on electrode material and electrode design. Each gas electrode may include one or a combination of these catalysts to optimize activity and durability.

The technical benefit of using these noble metal-based catalysts is their high catalytic efficiency toward both the hydrogen evolution reaction (HER) and the oxygen evolution reaction (OER) under acidic conditions. These materials offer low overpotentials, high current densities, and resistance to corrosion, enabling reliable and efficient gas production over prolonged operational cycles. Their inclusion also supports rapid switching between reactions during polarity reversal without requiring structural or material changes to the electrode.

Optionally, the controller of the two-cell decoupled water electrolysis device is configured to apply the second external voltage when at least one of the following is detected: the first redox mediator in a charged state, the second redox mediator in a charged state, the first redox mediator in a discharged state, the second redox mediator in a discharged state. Optionally, the controller of the two-cell decoupled water electrolysis device is further configured to measure a voltage of the second electrical connection and wherein the second external voltage is applied when the voltage below a voltage threshold value is detected.

The technical benefit of applying the above features assures that the device architecture provides consistent system responsiveness and operational safety. By integrating redox-state monitoring into the controller, the device autonomously cycles between hydrogen and oxygen evolution phases, ensuring optimal use of redox materials and preventing degradation due to overcharging or over-discharging.

### DETAILED DESCRIPTION OF THE DRAWINGS

Referring to FIG. 1a and FIG. 1b each are a schematic illustration of a two-cell decoupled acid water electrolysis device **100** according to an embodiment of the present disclosure. The device **100** comprises a first electrolysis cell **110** and a second electrolysis cell **120,** each configured to operate with an acid electrolyte **112.** FIG. 1a illustrates gas generations during a first period of time and the FIG. 1b illustrates gas generations during a second period of time.

The first electrolysis cell **110** includes a first gas electrode **114a** and a first redox electrode **116a.** The first gas electrode **114a** is positioned to be in direct contact with the acid electrolyte **112,** enabling the electrochemical generation of hydrogen gas (H₂) (FIG. 1a) during the first period of time and oxygen gas (O₂) (FIG. 1b) during the second period of time. The first redox electrode **116a** is also in contact with the acid electrolyte **112.** The second electrolysis cell **120** comprises a second gas electrode **114b** and a second redox electrode **116b.** Similar to the first electrolysis cell, the second gas electrode **114b** is in contact with the acid electrolyte **112.**

An external power supply **130** is electrically connected to the first gas electrode **114a** and the second gas electrode **114b** via electrical connections. The external power supply **130** is configured to apply an external voltage between the first gas electrode **114a** and the second gas electrode **114b,** enabling the alternating electrochemical reactions required for gas production. During a first period of time (FIG. 1a), a first external voltage is applied, resulting in hydrogen generation at the first gas electrode **114a** and oxygen generation at the second gas electrode **114b.** During a second period of period (FIG. 1b), the polarity of the external voltage is reversed, causing hydrogen (H₂) to be generated at the second gas electrode **114b** and oxygen (O₂) at the first gas electrode **114a.**

The first redox electrode **116a** and the second redox electrode **116b** are electrically connected by a first electrical connection **140.** This connection **140** allows electron transfer between the two redox electrodes **116a** and **116b.**

FIG. 1a and FIG. 1b is merely an example, which should not unduly limit the scope of the claims herein. A person skilled in the art will recognize many variations, alternatives, and modifications of embodiments of the present disclosure.

## Claims

1. A method for producing hydrogen and oxygen using a two-cell decoupled water electrolysis device (100) comprising a first gas electrode (114a) and a first redox electrode (116a) in a first electrolysis cell (110), a second gas electrode (114b) and a second redox electrode (116b) in a second electrolysis cell (120), the first electrolysis cell and the second electrolysis cell further comprising an acid electrolyte (112), the method comprising following steps:
a) generating hydrogen gas at the first gas electrode and oxygen gas at the second gas electrode during a first period of time by
- applying a first external voltage between the first gas electrode and the second gas electrode to
∘ generate hydrogen gas at the first gas electrode;
∘ generate oxygen gas at the second gas electrode;
- collecting hydrogen gas from the first electrolyte cell and oxygen gas from the second electrolyte cell using a gas management system;
b) generating hydrogen gas at the second gas electrode and oxygen gas at the first redox electrode during a second period of time by
- applying a second external voltage between the first gas electrode and the second gas electrode, wherein the second external voltage is applied with a polarity opposite to that of the first external voltage, to
∘ generate hydrogen gas at the second gas electrode;
∘ generate oxygen gas at the first gas electrode;
- collecting hydrogen gas from the second electrolyte cell and oxygen gas from the first electrolyte cell during the first period of time using the gas management system.

2. A method according to claim 1, wherein the two-cell decoupled water electrolysis device (100) further comprises a first redox mediator in the first electrolysis cell (110) and a second redox mediator in the second electrolysis cell (120), wherein during the first period of time the first redox mediator is in a charged state the second redox mediator is in a discharged state and the first period of time lasts until the first redox mediator is in the discharged state and the second redox mediator is in the charged state.

3. A method according to claim 2, wherein the first redox mediator and the second redox mediator comprise at least one of: tungsten trioxide, manganese dioxide, vanadium(IV) oxide, carbon, titanium dioxide, molybdenum trioxide.

4. The method according to claims 2 or 3, wherein the second external voltage is applied when at least one of the following is detected: the first redox mediator in a charged state, the second redox mediator in a charged state, the first redox mediator in a discharged state, the second redox mediator in a discharged state.

5. The method according to any of the preceding claims, wherein the first external voltage and the second external voltage is in a range from 1.6 V up to 2.2 V.

6. The method according to any of the preceding claims, wherein the hydrogen gas is generated via a hydrogen evolution reaction (HER) and oxygen is generated via an oxygen evolution reaction (OER).

7. The method according to any of the preceding claims, further comprising measuring a voltage between the first gas electrode (114a) and the second gas electrode (114b) and wherein the second external voltage is applied when the voltage below a voltage threshold value is detected.

8. A two-cell acid water electrolysis device (100) for producing hydrogen and oxygen comprising, the two-cell acid water electrolysis device comprising:
- a first electrolysis cell (110) comprising:
∘ a first gas electrode (114a);
∘ a first redox electrode (116a); and
∘ an acid electrolyte (112).
- a second electrolysis cell (120) comprising;
∘ a second gas electrode (114b);
∘ a second redox electrode (116b); and
∘ the acid electrolyte;
- a first electrical connection (140) between the first redox electrode and the second redox electrode;
- a second electrical connection between the first gas electrode and the second gas electrode;
- an external power supply (130) electrically connected to the first gas electrode and the second gas electrode, the external power supply configured to apply an external voltage between the first gas electrode and the second gas electrode;
- a gas management system configured to separately collect hydrogen gas from the first electrolysis cell and oxygen gas from the second electrolysis cell;
- a controller configured to control:
∘ the external power supply to
▪ apply a first external voltage between the first gas electrode and the second gas electrode during a first period of time to
• generate hydrogen gas at the first gas electrode;
• generate oxygen gas at the second gas electrode;
▪ apply a second external voltage between the first gas electrode and the second gas electrode during a second period of time, wherein the second external voltage is applied with a polarity opposite to that of the first external voltage, to
• generate hydrogen gas at the second gas electrode;
• generate oxygen gas at the first gas electrode;
o gas management system to collect
▪ hydrogen gas from the first electrolyte cell and oxygen gas from the second electrolyte cell during the first period of time;
▪ hydrogen gas from the second electrolyte cell and oxygen gas from the first electrolyte cell during the second period of time.

9. The two-cell decoupled water electrolysis device (100) according to claim 8, wherein the redox electrode is a pseudocapacitive redox electrode.

10. The two-cell decoupled water electrolysis device (100) according to any of the claims 8-9, wherein the first electrolysis cell (110) and the second electrolysis cell (120) are acid-resistant.

11. The two-cell decoupled water electrolysis device (100) according to any of the claims 8-10, further comprises a first redox mediator in the first electrolysis cell (110) and a second redox mediator in the second electrolysis cell (120), wherein during the first period of time the first redox mediator is in a charged state the second redox mediator is in a discharged state and the first period of time lasts until the first redox mediator is in the discharged state and the second redox mediator is in the charged state.

12. The two-cell decoupled water electrolysis device (100) according to claim 11, wherein the first redox mediator and the second redox mediator comprise at least one of: tungsten trioxide, manganese dioxide, vanadium(IV) oxide, carbon, titanium dioxide, molybdenum trioxide.

13. The two-cell decoupled water electrolysis device according to any of the claims 8-11, wherein the first gas electrode (114a) and the second gas electrode (114b) each independently comprise one or more catalysts selected from platinum (Pt), iridium dioxide (IrO₂), and ruthenium dioxide (RuO₂).

14. The two-cell decoupled water electrolysis device (100) according to any of the claims 8-12, wherein the controller is configured to apply the second external voltage when at least one of the following is detected: the first redox mediator in a charged state, the second redox mediator in a charged state, the first redox mediator in a discharged state, the second redox mediator in a discharged state.

15. The two-cell decoupled water electrolysis device (100) according to any of the claims 8-13, wherein the controller is further configured to measure a voltage of the second electrical connection and wherein the second external voltage is applied when the voltage below a voltage threshold value is detected.

## Amended claims

### Amended claims in accordance with Rule 137(2) EPC.

1. A method for producing hydrogen and oxygen using a two-cell decoupled water electrolysis device (100) comprising a first gas electrode (114a) and a first redox electrode (116a) in a first electrolysis cell (110), a second gas electrode (114b) and a second redox electrode (116b) in a second electrolysis cell (120), the first electrolysis cell and the second electrolysis cell further comprising an acid electrolyte (112), the method comprising following steps:
a) generating hydrogen gas at the first gas electrode and oxygen gas at the second gas electrode during a first period of time by
- applying a first external voltage between the first gas electrode and the second gas electrode to
o generate hydrogen gas at the first gas electrode;
o generate oxygen gas at the second gas electrode;
- collecting hydrogen gas from the first electrolyte cell and oxygen gas from the second electrolyte cell using a gas management system;
b) generating hydrogen gas at the second gas electrode and oxygen gas at the first redox electrode during a second period of time by
- applying a second external voltage between the first gas electrode and the second gas electrode, wherein the second external voltage is applied with a polarity opposite to that of the first external voltage, to
o generate hydrogen gas at the second gas electrode;
o generate oxygen gas at the first gas electrode;
- collecting hydrogen gas from the second electrolyte cell and oxygen gas from the first electrolyte cell during the second period of time using the gas management system.

2. A method according to claim 1, wherein the two-cell decoupled water electrolysis device (100) further comprises a first redox mediator in the first electrolysis cell (110) and a second redox mediator in the second electrolysis cell (120), wherein during the first period of time the first redox mediator is in a charged state the second redox mediator is in a discharged state and the first period of time lasts until the first redox mediator is in the discharged state and the second redox mediator is in the charged state.

3. A method according to claim 2, wherein the first redox mediator and the second redox mediator comprise at least one of: tungsten trioxide, manganese dioxide, vanadium(IV) oxide, carbon, titanium dioxide, molybdenum trioxide.

4. The method according to claims 2 or 3, wherein the second external voltage is applied when at least one of the following is detected: the first redox mediator in a charged state, the second redox mediator in a charged state, the first redox mediator in a discharged state, the second redox mediator in a discharged state.

5. The method according to any of the preceding claims, wherein the first external voltage and the second external voltage is in a range from 1.6 V up to 2.2 V.

6. The method according to any of the preceding claims, wherein the hydrogen gas is generated via a hydrogen evolution reaction (HER) and oxygen is generated via an oxygen evolution reaction (OER).

7. The method according to any of the preceding claims, further comprising measuring a voltage between the first gas electrode (114a) and the second gas electrode (114b) and wherein the second external voltage is applied when the voltage below a voltage threshold value is detected.

8. A two-cell acid water electrolysis device (100) for producing hydrogen and oxygen comprising, the two-cell acid water electrolysis device comprising:
- a first electrolysis cell (110) comprising:
o a first gas electrode (114a);
o a first redox electrode (116a); and
o an acid electrolyte (112).
- a second electrolysis cell (120) comprising;
o a second gas electrode (114b);
o a second redox electrode (116b); and
o the acid electrolyte;
- a first electrical connection (140) between the first redox electrode and the second redox electrode;
- a second electrical connection between the first gas electrode and the second gas electrode;
- an external power supply (130) electrically connected to the first gas electrode and the second gas electrode, the external power supply configured to apply an external voltage between the first gas electrode and the second gas electrode;
- a gas management system configured to separately collect hydrogen gas from the first electrolysis cell and oxygen gas from the second electrolysis cell;
- a controller configured to control:
o the external power supply to
▪ apply a first external voltage between the first gas electrode and the second gas electrode during a first period of time to
• generate hydrogen gas at the first gas electrode;
• generate oxygen gas at the second gas electrode;
▪ apply a second external voltage between the first gas electrode and the second gas electrode during a second period of time, wherein the second external voltage is applied with a polarity opposite to that of the first external voltage, to
• generate hydrogen gas at the second gas electrode;
• generate oxygen gas at the first gas electrode;
o gas management system to collect
▪ hydrogen gas from the first electrolyte cell and oxygen gas from the second electrolyte cell during the first period of time;
▪ hydrogen gas from the second electrolyte cell and oxygen gas from the first electrolyte cell during the second period of time.

9. The two-cell decoupled water electrolysis device (100) according to claim 8, wherein the redox electrode is a pseudocapacitive redox electrode.

10. The two-cell decoupled water electrolysis device (100) according to any of the claims 8-9, wherein the first electrolysis cell (110) and the second electrolysis cell (120) are acid-resistant.

11. The two-cell decoupled water electrolysis device (100) according to any of the claims 8-10, further comprises a first redox mediator in the first electrolysis cell (110) and a second redox mediator in the second electrolysis cell (120), wherein during the first period of time the first redox mediator is in a charged state the second redox mediator is in a discharged state and the first period of time lasts until the first redox mediator is in the discharged state and the second redox mediator is in the charged state.

12. The two-cell decoupled water electrolysis device (100) according to claim 11, wherein the first redox mediator and the second redox mediator comprise at least one of: tungsten trioxide, manganese dioxide, vanadium(IV) oxide, carbon, titanium dioxide, molybdenum trioxide.

13. The two-cell decoupled water electrolysis device according to any of the claims 8-11, wherein the first gas electrode (114a) and the second gas electrode (114b) each independently comprise one or more catalysts selected from platinum (Pt), iridium dioxide (IrO₂), and ruthenium dioxide (RuO₂).

14. The two-cell decoupled water electrolysis device (100) according to any of the claims 8-12, wherein the controller is configured to apply the second external voltage when at least one of the following is detected: the first redox mediator in a charged state, the second redox mediator in a charged state, the first redox mediator in a discharged state, the second redox mediator in a discharged state.

15. The two-cell decoupled water electrolysis device (100) according to any of the claims 8-13, wherein the controller is further configured to measure a voltage of the second electrical connection and wherein the second external voltage is applied when the voltage below a voltage threshold value is detected.
